# FASCICULE DE BREVET EUROPEEN

(11) **EP 3 529 785 B1**
(45) Date de publication et mention de la délivrance du brevet: **29.11.2023**
(21) Numéro de dépôt: 17792119.4
(22) Date de dépôt: 09.10.2017
(51) Int. Cl.: G07G 1/00, G06Q 20/20, G07F 17/00

(54) **SYSTÈME D'IDENTIFICATION OU D'AIDE À L'IDENTIFICATION D'UN PRODUIT OU ENSEMBLE DE PRODUITS**
SYSTEM ZUR IDENTIFIZIERUNG ODER UNTERSTÜTZUNG DER IDENTIFIZIERUNG EINES PRODUKTS ODER EINES PRODUKTSETS
SYSTEM FOR IDENTIFYING OR ASSISTING THE IDENTIFICATION OF A PRODUCT OR SET OF PRODUCTS

(30) Priorité: 20.10.2016 FR 1660187; 26.07.2017 FR 1757109
(43) Date de publication de la demande: 28.08.2019
(73) Titulaire: JES, 44800 Saint-Herblain (FR)
(72) Inventeur: JACQUET, Eric, 44100 Nantes (FR)
(74) Mandataire: Ipsilon
(86) Numéro de dépôt international: PCT/FR2017/052752
(87) Numéro de publication internationale: WO 2018/073510

(56) Documents cités:
- EP-A2- 3 038 015
- WO-A1-2013/039393
- US-A- 5 497 314
- US-A1- 2005 205 677
- US-A1- 2015 194 025
- US-A1- 2016 292 662

## Description

### DOMAINE DE L'INVENTION

La présente invention concerne de manière générale l'identification ou l'aide à l'identification d'un produit ou ensemble de produits, tel que le contenu d'un plateau repas, d'un utilisateur.

La présente invention trouve une application avantageuse dans le domaine de la restauration collective, mais bien entendu la présente invention peut aussi s'appliquer à d'autres domaines pour lesquels on souhaite identifier ou aider à identifier un produit ou ensemble de produits d'un utilisateur.

### ART ANTERIEUR

Dans le domaine de la restauration collective, les utilisateurs prennent usuellement un plateau repas sur lequel ils déposent différents produits à consommer, puis ils passent en caisse.

Lorsque l'utilisateur est arrivé à la caisse, l'opérateur de caisse identifie et enregistre sur un système, les produits correspondant au contenu du plateau. Les produits enregistrés correspondent à une somme que l'utilisateur doit payer.

Généralement l'utilisateur présente un badge associé à un compte qui est débité du montant de la somme à payer. On constate qu'en moyenne haute, le nombre de passage de plateaux à la minute par caisse est faible, de l'ordre de six.

On comprend qu'il est souhaitable de pouvoir diminuer le temps d'attente des utilisateurs au sein de tels restaurants.

On connait de l'état de la technique et notamment des documents EP3038015, US5497314 et WO2013039393, des systèmes permettant d'identifier automatiquement des produits, puis de payer, en espèce ou à l'aide d'une carte de paiement, une somme correspondant à ces produits.

Il est cependant souhaitable de pouvoir réduire encore le temps de passage des utilisateurs au niveau d'un tel système tout en bénéficiant d'images des produits qui soient exploitables de manière fiable pour pouvoir identifier ou aider à identifier correctement ces produits.

La présente invention a pour but de proposer un système permettant de palier à tout ou partie des problèmes exposés ci-dessus.

### RESUME DE L'INVENTION

A cet effet, l'invention a pour objet un système d'identification ou d'aide à l'identification d'un produit ou ensemble de produits, tel que des produits correspondant au contenu d'un plateau repas, d'un utilisateur,
ledit système d'identification ou d'aide à l'identification comprenant :
   - une surface de pose dudit produit ou ensemble de produits ;
   - un système d'éclairage permettant d'éclairer la surface de pose;
   - plusieurs dispositifs d'acquisition d'images orientés vers la surface de pose de manière à acquérir des images dudit produit ou ensemble de produits selon différents angles de vue ;
   - un écran d'affichage;
caractérisé en ce que le système d'identification ou d'aide à l'identification comprend aussi:
   - une première base de données dans laquelle sont enregistrées des données de comptes utilisateurs, chaque compte utilisateur comprenant :
      ∘ un identifiant d'un utilisateur;
      ∘ une valeur de solde, créditeur ou débiteur ;
   - un dispositif d'identification permettant d'identifier l'utilisateur ;
   - un dispositif de pilotage configuré pour :
      - acquérir un identifiant de l'utilisateur ;
      - déterminer si l'identifiant de l'utilisateur acquis correspond à l'identifiant de l'utilisateur d'un compte utilisateur enregistré ;
      - acquérir des images dudit produit ou ensemble de produits à l'aide desdits dispositifs d'acquisition d'images ;
associer les images acquises et l'identifiant de l'utilisateur dans une deuxième base de données,
et en ce que le système comprenant une face de fond qui s'étend sensiblement orthogonalement à la surface de pose, la face de fond absorbe moins la lumière du jour que la surface de pose,
et en ce que lesdits dispositifs d'acquisition d'images comprennent un premier dispositif d'acquisition d'images dont l'axe optique est orienté perpendiculairement à la surface de pose, ainsi qu'un deuxième et un troisième dispositifs d'acquisition d'images disposés de part et d'autre d'un plan passant par l'axe optique du premier dispositif d'acquisition d'images et perpendiculaire à la face de fond, les axes optiques étant orientés vers la surface de pose et inclinés en sens opposé l'un de l'autre par rapport à l'axe optique du premier dispositif d'acquisition d'images.

On entend par produit un objet concret que l'utilisateur peut manipuler. Ledit produit peut-être de type comestible ou non.

Dans le cas d'une restauration collective où ledit produit ou ensemble de produits correspond au contenu d'un plateau, le système selon l'invention permet d'accélérer et de fluidifier le passage au niveau de la caisse formée par ledit système.

En particulier, l'utilisation de plusieurs dispositifs d'acquisition d'images permet de bénéficier d'images dudit produit ou ensemble de produits selon différents angles et ainsi d'identifier de manière fiable ledit produit ou ensemble de produits.

En outre, l'association de l'identifiant de l'utilisateur à ces images permet de gérer efficacement et de manière fiable l'achat du ou des produits par l'utilisateur et de contrôler également l'utilisation du système.

Une telle conception du système permet à la personne de poser son plateau et que les opérations d'acquisition d'identifiant, d'acquisition d'images et d'association soient effectuées, et que la personne puisse quitter ledit poste pour aller se restaurer, sans que la personne doive aller à un deuxième poste distinct, hormis dans certains cas particuliers, par exemple lorsque l'utilisateur n'est pas reconnu. Dans ce cas particulier, l'utilisateur peut être invité, par des indications correspondantes affichées à l'écran, à se diriger vers un poste de traitement spécifique où un opérateur est présent.

Selon un aspect particulier, le système émet une autorisation de quitter le poste pour aller manger (cas nominal) ou une invitation à se diriger vers un autre endroit, par exemple un poste de traitement spécifique (cas particulier), qui se matérialise par un message affiché et/ou par l'émission d'un signal visuel et/ou auditif, et/ou par l'émission d'un signal de commande d'un système mécanique de contrôle de passage par exemple pour déverrouiller une barrière.

Les dispositifs d'acquisition d'images, le système d'éclairage, la surface de pose du plateau peuvent faire partie d'une même structure se présentant sous la forme d'un poste (ou borne) devant lequel l'utilisateur se positionne pour poser son produit ou ensemble de produits. Les autres éléments du système peuvent être ou non intégrés au poste.

Selon une caractéristique avantageuse de l'invention, le dispositif de pilotage est aussi configuré pour, après que l'identifiant a été associé aux images acquises, commander un dispositif d'autorisation de sortie ou d'indication pour permettre ou indiquer à l'utilisateur de reprendre son ou ses produits.

Avantageusement, la face de fond est configurée de manière à diffuser la lumière issue du système d'éclairage.

En particulier, la diffusion de la lumière par la face de fond permet d'améliorer l'homogénéité de la répartition de l'éclairage au niveau dudit ensemble de produits en limitant l'importance des zones d'ombre et en limitant la présence de reflets lumineux.

La surface de pose est choisie de manière à diffuser la lumière reçue le moins possible pour limiter le renvoi de la lumière, issue du système d'éclairage, vers les dispositifs d'acquisition d'images en regard desquels ladite surface de pose se situe et assurer un contraste suffisant avec lesdits produits à identifier.

L'agencement des dispositifs d'acquisition d'images, qui comprennent par exemple des caméras, permet d'obtenir des images sous différents angles pour identifier de manière fiable le ou les produits présents. En particulier, un tel agencement permet d'identifier efficacement avec au moins l'un des dispositifs d'acquisition d'images, un produit qui serait masqué par un autre produit dans le champ d'un autre dispositif d'acquisition d'images.

Selon une caractéristique avantageuse de l'invention, le système comprend une troisième base de données qui comprend des ensembles de données, appelés commandes, chaque ensemble comprenant l'identifiant de l'utilisateur et une valeur correspondant au prix de vente dudit produit ou ensemble de produits.

Selon une caractéristique avantageuse de l'invention, le système d'éclairage comprend des dispositifs d'éclairage et un dispositif de diffusion de la lumière, tel qu'une plaque translucide, par exemple en plexiglass.

La diffusion de la lumière par le dispositif de diffusion permet d'obtenir une répartition homogène de la lumière et de limiter la présence d'ombre et/ou de reflet brillant qui pourraient apparaitre sur les images et gêner leur exploitation.

Selon une caractéristique avantageuse de l'invention, chaque compte utilisateur comprenant une information de droit d'utilisation pour indiquer si l'utilisateur associé au compte utilisateur est autorisé ou non à utiliser ledit système d'identification ou d'aide à l'identification,
le dispositif de pilotage est configuré pour, après avoir déterminé le compte utilisateur correspondant à l'identifiant de l'utilisateur acquis, autoriser ou non l'utilisation du système en fonction de l'information de droit d'utilisation associée audit compte utilisateur.

Selon une caractéristique avantageuse de l'invention, au moins l'un des dispositifs d'acquisition d'images permettant de fournir un flux vidéo, le dispositif de pilotage est configuré pour :
- détecter l'introduction dudit produit ou ensemble de produits au niveau de la surface de pose ;
- afficher à l'écran, la vidéo du produit ou de l'ensemble de produits présent au niveau de la surface de pose, ainsi que des informations définies en fonction de la position du produit ou de l'ensemble de produits par rapport à la surface de pose pour indiquer si le produit ou l'ensemble de produits est correctement positionné.

Selon une caractéristique avantageuse de l'invention, le dispositif de pilotage est configuré pour, à partir des images du flux vidéo et en fonction d'au moins une règle prédéfinie, déterminer si le produit ou l'ensemble de produits est ou non correctement positionné relativement à la surface de pose.

Selon une caractéristique avantageuse de l'invention, le dispositif de pilotage est configuré pour autoriser ou non l'acquisition de l'identifiant utilisateur à l'aide du dispositif d'identification, en fonction de l'état de positionnement dudit produit ou ensemble de produits par rapport à la surface de pose.

Selon une caractéristique avantageuse de l'invention, le dispositif de pilotage est configuré pour déclencher l'acquisition des images dudit produit ou ensemble de produits en fonction de caractéristiques de l'identifiant utilisateur acquis.

La face de fond absorbe moins la lumière naturelle que la surface de pose. Préférentiellement, le système d'éclairage émet une lumière de type lumière de jour, par exemple de température de couleur de l'ordre de 6400°K. La lumière émise par le système d'éclairage est donc moins absorbée par la face de fond que par la surface de pose. La face de fond est mate pour une bonne diffusion de lumière et ainsi une homogénéité de l'éclairage. Avantageusement, la surface de pose est mate pour éviter l'apparition d'éclats.

Selon une caractéristique avantageuse de l'invention, pour réaliser l'étape d'acquisition d'images, le dispositif de pilotage est configuré pour extraire une image dudit flux vidéo acquis par l'un des dispositifs d'acquisition d'images.

Selon une caractéristique avantageuse de l'invention, chaque dispositif d'acquisition d'images comprenant un capteur CCD, le dispositif de pilotage est configuré pour détecter la luminosité ambiante, et régler la sensibilité des capteurs CCD en fonction de la luminosité ambiante mesurée.

Selon une caractéristique avantageuse de l'invention, le dispositif de diffusion de la lumière présente une face, orientée vers la surface de pose, qui est courbe.

La courbure de la face du dispositif de diffusion qui est orientée vers la surface de pose, favorise la bonne répartition du flux lumineux au niveau dudit ensemble de produits à identifier.

Selon une caractéristique avantageuse de l'invention, la surface de pose est formée d'une seule pièce et présente, du côté de la face de fond, un bord relevé limitant le risque d'infiltration dans le poste.

Selon une caractéristique avantageuse de l'invention, le dispositif de pilotage est aussi configuré pour, à partir des images acquises associées à l'identifiant de l'utilisateur, identifier au moins une partie dudit ensemble de produits.

### BREVE DESCRIPTION DES DESSINS

D'autres caractéristiques et avantages de l'invention ressortiront encore de la description qui suit, laquelle est purement illustrative et non limitative et doit être lue en regard des dessins annexés, sur lesquels :
- la figure 1 est une vue en perspective d'un système comprenant un poste à l'intérieur duquel un utilisateur introduit un plateau et son contenu, un lecteur de badge et des bases de données, conformément à un mode de réalisation de l'invention ;
- la figure 2 est une vue en perspective du poste de la figure 1 conformément à un mode de réalisation de l'invention, une partie de l'habillage du poste étant retirée pour montrer le système d'éclairage et les dispositifs d'acquisition d'images ;
- la figure 3 est une vue de face du poste de la figure 1 conformément à un mode de réalisation de l'invention, une partie de l'habillage du poste étant retirée pour montrer l'orientation des dispositifs d'acquisition d'images, le système d'éclairage n'étant pas représenté ;
- la figure 4 est une vue de dessus du poste de la figure 3 ;
- la figure 5 est une vue éclatée du poste de la figure 1 conformément à un mode de réalisation de l'invention, le système d'éclairage n'étant pas représenté.

### DESCRIPTION DETAILLEE

Le concept de l'invention est décrit plus complètement ci-après avec référence aux dessins joints, sur lesquels des modes de réalisation du concept de l'invention sont montrés. Des numéros similaires font référence à des éléments similaires sur tous les dessins. Cependant, ce concept de l'invention peut être mis en oeuvre sous de nombreuses formes différentes et ne devrait pas être interprété comme étant limité aux modes de réalisation exposés ici. Au lieu de cela, ces modes de réalisation sont proposés de sorte que cette description soit complète, et communique l'étendue du concept de l'invention aux hommes du métier. L'étendue de l'invention est par conséquent définie par les revendications jointes. Les modes de réalisation qui suivent sont examinés, par souci de simplification, en relation avec la terminologie et la structure d'un poste d'aide à l'identification ou d'identification du contenu d'un plateau repas. Cependant, les modes de réalisation qui seront examinés ensuite ne sont pas limités à une telle application à l'identification ou à l'aide à l'identification du contenu d'un plateau repas, mais peuvent être appliqués à l'identification ou à l'aide à l'identification de n'importe quel produit ou ensemble de produits avec ou sans contenant.

Une référence dans toute la description à « un mode de réalisation » signifie qu'une fonctionnalité, une structure, ou une caractéristique particulière décrite en relation avec un mode de réalisation est incluse dans au moins un mode de réalisation de la présente invention. Ainsi, l'apparition de l'expression « dans un mode de réalisation » à divers emplacements dans toute la spécification ne fait pas nécessairement référence au même mode de réalisation. En outre, les fonctionnalités, les structures, ou les caractéristiques particulières peuvent être combinées de n'importe quelle manière appropriée dans un ou plusieurs modes de réalisation.

On a représenté aux figures, un système d'identification ou d'aide à l'identification d'un produit ou ensemble de produits correspondant au contenu d'un plateau 2 de repas. La description ci-après fait référence à un ensemble de produits mais s'applique bien entendu aussi à un produit.

Le système comporte un poste 1 et une ou plusieurs bases de données 700, 800, 900 locale(s) ou déportée(s). En particulier, la ou chaque base de données peut être localisée dans le poste 1 ou déportée, par exemple sur un serveur avec lequel le poste 1 est apte à communiquer. En particulier, la ou chaque base de données est stockée dans une mémoire qui peut être inclue dans le poste ou déportée.

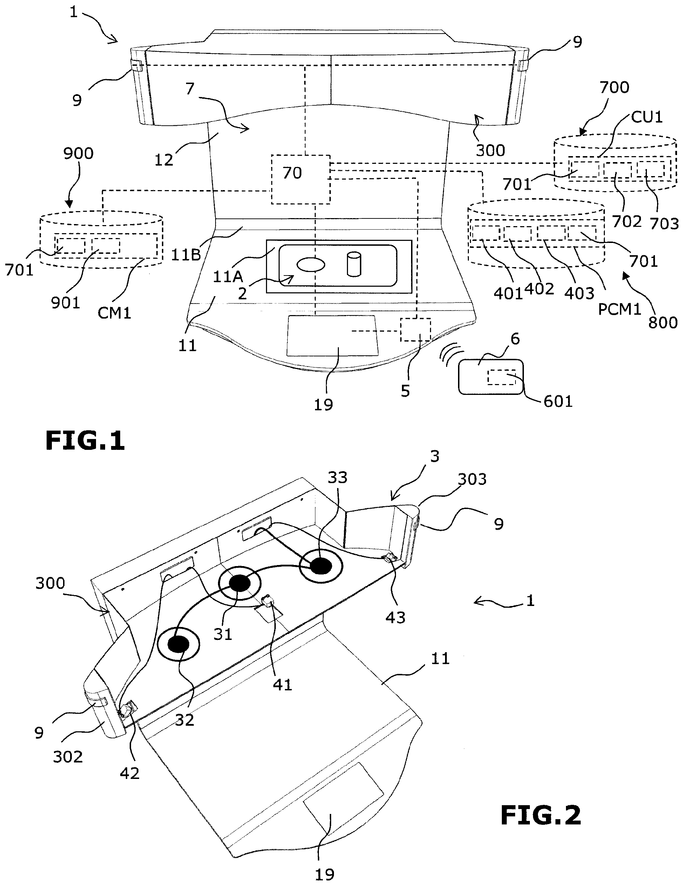

Dans l'exemple illustré à la figure 1, trois bases de données 700, 800 et 900 sont schématisées. Ces bases de données peuvent être stockées sur une même mémoire ou sur plusieurs mémoires distinctes.

La première base de données 700 comprend les données de comptes utilisateurs prédéfinis. Dans l'exemple illustré à la figure 1, un seul compte utilisateur CU1 est schématisé, mais bien entendu plusieurs comptes utilisateurs non représentés sont définis dans la base de données 700.

Chaque compte utilisateur CU1 comprend un identifiant d'un utilisateur 701 du compte et une valeur de solde 702 du compte, créditeur ou débiteur. Selon un mode de réalisation préféré, chaque compte est un compte monétique privatif.

Selon un aspect particulier, chaque compte utilisateur CU1 comprend aussi d'autres informations, telles qu'une information de droit d'utilisation 703. L'information de droit d'utilisation 703 est par exemple une information indiquant si l'utilisateur est autorisé ou non à utiliser ledit système d'identification ou d'aide à l'identification. On peut en effet prévoir qu'un utilisateur soit autorisé à accéder à un poste donné présent dans un restaurant, mais pas à un autre poste qui serait présent dans un autre restaurant.

L'information d'utilisation peut comprendre une ou plusieurs données permettant au dispositif de pilotage :
- de valider le droit général d'utilisation du poste parmi plusieurs postes, et/ou
- de vérifier le statut du compte : par exemple « valide », « clôturé »,
- le cas échéant, de vérifier le statut du support matériel de l'identifiant utilisateur badge : par exemple « perdu », « actif », ou « inactif »
Le dispositif de pilotage commande l'affichage de message à l'écran en fonction de ces données.

Avantageusement, le compte utilisateur comprend une donnée correspondant au nombre de passage autorisé, c'est-à-dire au nombre de fois que le cycle d'acquisition d'identifiant et d'acquisition d'images peut être effectué avant que le compte ne soit débité. Ainsi, on peut prévoir que le dispositif de pilotage empêche l'exécution d'un nouveau cycle lorsque le nombre de passage autorisé est atteint et tant que le compte n'est pas débité, et que le dispositif de pilotage commande l'affichage à l'écran d'un message correspondant.

Ainsi, lorsque ce nombre de passage est fixé à 1, l'utilisateur ne peut passer qu'un seul plateau au niveau du poste, ce qui évite que l'utilisateur passe un nombre indéterminé de plateaux alors que son compte n'est pas suffisamment approvisionné. En effet le compte étant débité de manière désynchronisée par rapport au cycle d'étapes d'acquisition et d'association effectué au niveau du poste, la prise en compte d'un nombre de passage autorisé donné, combiné à la prise en compte d'une valeur de seuil de solde permettant d'utiliser le système, permet de réduire les cas d'utilisation frauduleux du système.

Selon un mode de réalisation, chaque compte utilisateur comprend aussi une information relative au(x) poste(s) auxquels l'utilisateur peut ou non accéder. A titre d'exemple, on peut prévoir que cette information est un identifiant de poste auquel l'utilisateur peut accéder.

La deuxième base de données 800 est présentée ci-après.

Le poste comprend une surface de pose 11 destinée à recevoir le plateau. A cet effet, la base peut comprendre des moyens de repérage, par exemple visuels et/ou matériels pour positionner le plateau. En variante ou de manière complémentaire, on peut prévoir que des moyens de repérage soient affichés sur un écran en même temps que l'image filmée du plateau et de son contenu lorsque celui-ci est introduit au niveau de la surface de pose. Un exemple de réalisation d'une telle aide au positionnement à l'aide d'un écran d'affichage est présenté ci-après.

Le poste comprend un système d'éclairage 3, représenté à la figure 2, permettant d'éclairer la surface de pose 11 du plateau. Ledit système d'éclairage 3 permet ainsi d'éclairer ledit ensemble de produits lorsque celui-ci est amené au niveau de la surface de pose 11. Comme détaillé ci-après, le poste 1 est configuré de manière à offrir de bonnes conditions d'éclairage pour permettre d'obtenir des images de bonne qualité et exploitables de manière efficace. Comme illustré aux figures, le système d'éclairage 3 est disposé au-dessus de la surface de pose 11 du plateau.

Le système d'éclairage 3 comprend des dispositifs d'éclairage 31, 32, 33 et un dispositif de diffusion 34 de la lumière, tel qu'une plaque translucide, par exemple en plexiglass. Avantageusement, les dispositifs d'éclairage 31, 32, 33 sont agencés en triangle ou en arc de cercle. Les dispositifs d'éclairage sont par exemple des LEDs Les dispositifs d'éclairage peuvent être agencés en éclairage direct ou indirect par exemple orientés vers la partie supérieure de la chambre 300 (présentée ci-après).

Dans l'exemple illustré aux figures, le dispositif de diffusion 34 de la lumière présente une face, orientée vers la surface de pose 11 du plateau, qui est courbe. Le centre de courbure est situé du côté de la surface de pose. Autrement dit, vu de la surface de pose, le dispositif de diffusion présente une face concave.

Le poste comprend un ensemble 4 de dispositifs d'acquisition d'images. Dans la suite de la description chacun des dispositifs d'acquisition d'images est une caméra 41, 42, 43 qui permet d'acquérir un flux vidéo, c'est-à-dire de filmer, la zone vers laquelle la caméra est orientée. Chaque caméra 41, 42, 43 permet également d'acquérir une image. Selon un mode de réalisation particulier, chaque caméra peut acquérir une image en extrayant cette image d'un flux vidéo acquis. Selon un aspect particulier, chaque caméra est une caméra CCD.

Ainsi, dans la suite de la description, chaque dispositif d'acquisition d'images est une caméra, mais la description s'applique aussi à d'autres types de dispositifs d'acquisition d'images, et en particulier à des caméras autres que des caméras CCD.

Selon un aspect particulier, en vue de dessus du poste, c'est-à-dire en projection dans un plan parallèle à la surface de pose 11, les dispositifs d'éclairage 31, 32, 33 sont situés entre la face de fond 12 et les dispositifs d'acquisition d'images 41, 42, 43.

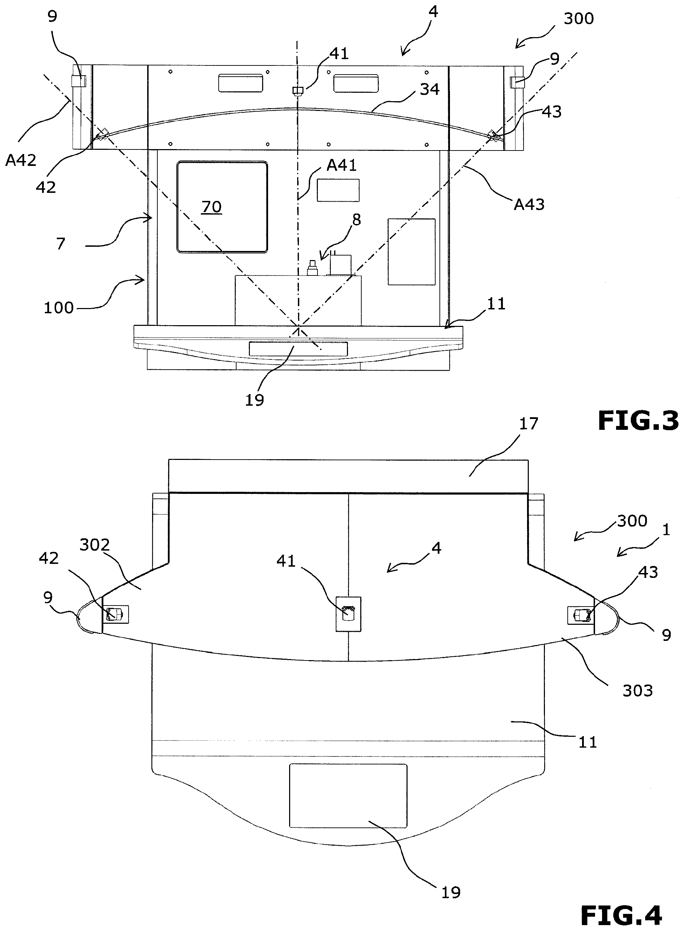

Selon un mode de réalisation illustré plus particulièrement à la figure 3, les caméras 41, 42, 43 sont orientées vers la surface de pose 11 du plateau selon des directions optiques différentes afin de pouvoir acquérir des images du plateau selon différents angles.

Le poste 1 comprend une face de fond 12 qui s'étend sensiblement orthogonalement à la surface de pose 11 du plateau. La face de fond 12 est choisie de manière à présenter une faible absorption de la lumière du jour (ou lumière naturelle) et de la lumière issue du système d'éclairage, par rapport à la surface de pose 11. Préférentiellement, la face de fond 12 est mate, par exemple blanc mat. Selon un mode de réalisation, la surface de pose 11 est plus foncée que la face de fond 12. Selon un mode de réalisation préféré, la surface de pose 11 est de couleur grise pour permettre de distinguer de manière fiable la surface de pose 11 par rapport au contenu du plateau et par rapport au plateau lui-même. Selon un aspect particulier, la surface de pose est mate. La face de fond présente une réflexion diffusive de la lumière du jour et/ou de la lumière du système d'éclairage qui est supérieure à celle obtenue avec la surface de pose.

La caméra 41 présente un axe optique A41 orienté perpendiculairement à la surface de pose 11, c'est-à-dire verticalement. Cette caméra 41 permet ainsi de filmer et/ou de prendre une image du dessus du contenu du plateau. Deux autres caméras 42, 43 sont disposées, de préférence de manière symétrique, de part et d'autre d'un plan qui passe par l'axe optique A41 de la caméra 41 et qui est perpendiculaire à la face de fond 12.

Une telle distribution des caméras 41, 42, 43 permet de voir l'ensemble de produits par deux côtés opposés et par le dessus pour obtenir un nombre d'information suffisant afin d'identifier de manière fiable chacun des produits, malgré la présence éventuelle d'un produit qui en masquerait un autre, ou malgré la ressemblance d'un produit, vu sous un angle donné, avec un autre produit.

Les caméras 42, 43 sont de préférence orientées de sorte que leurs axes optiques A42, A43 forment un angle compris entre 40° et 50°, de préférence 45°, avec la verticale.

Selon un mode de réalisation particulier, au moins l'une des caméras, de préférence la caméra 41 de dessus, filme en continu. Le dispositif de pilotage 7 (présenté ci-après) est configuré pour détecter l'introduction du plateau et de son contenu dans le champ de la caméra et pour afficher en temps réel sur un écran 19 d'affichage la vidéo correspondante.

La détection d'un objet entrant dans le champ de la caméra peut être réalisée par analyse de l'image filmée à l'aide d'un module d'analyse d'images inclus dans le dispositif de pilotage.

Des informations sont également affichées à l'écran 19, par exemple en superposition, pour permettre un positionnement correct et rapide du plateau et de son contenu. Ces informations sont définies de manière à :
- guider l'utilisateur dans le positionnement du plateau et éventuellement de son contenu ;
- et/ou indiquer l'état correct ou non du positionnement ; et/ou
- indiquer des corrections à effectuer.

Le contrôle du positionnement correct du plateau et de son contenu au niveau de la surface de pose 11 participe, en combinaison avec les bonnes conditions d'éclairage et les prises d'images selon différents angles, à l'obtention d'images qui sont exploitables pour identifier efficacement les produits présents dans chacune de ces images.

L'invention permet ainsi d'obtenir en un temps réduit, des images des produits qui sont exploitables de manière fiable et efficace puisque, d'une part, le système détecte la présence du plateau et indique à l'utilisateur si le plateau est correctement positionné, et d'autre part les images fournissent différents angles de vue desdits produits, ces images étant en outre obtenues dans de bonnes conditions d'éclairage notamment grâce à la configuration particulière de la face de fond et de la surface de pose.

Le fait de combiner différentes orientations particulières des caméras et une telle configuration particulière en terme de diffusion de lumière de la face de fond par rapport à la surface de pose permet, non seulement d'obtenir des images des produits selon plusieurs angles de vue, mais également, aussi bien pour les caméras latérales que pour la caméra de dessus, de réduire la présence d'ombre ou d'éclat lumineux sur chaque image, que celle-ci soit issue d'une des caméras latérales ou de la caméra de dessus, et ce tout en assurant un éclairage suffisant. En effet, la face de fond 12 qui diffuse la lumière n'est pas dans le champ des caméras, contrairement à la surface de pose 11, de sorte que la lumière est diffusée par la face de fond 12 vers le contenu du plateau avec un risque réduit de présence d'éclat lumineux sur les images 401, 402, 403 qui pourrait gêner l'identification des produits.

Il est à noter qu'une telle configuration de la face de fond 12 et de la surface de pose 11 est particulièrement avantageuse dans le cas où l'image acquise desdits produits par une caméra est une image extraite d'un flux vidéo de la caméra. En effet, pour pouvoir exploiter correctement une image extraite d'un flux vidéo, il est nécessaire que le flux vidéo ait été acquis dans de bonnes conditions d'éclairage.

Selon un mode de réalisation, les axes optiques A41, A42, A43 des caméras 41, 42, 43 sont sensiblement coplanaires. Le plan dans lequel s'étendent les axes optiques A41, A42, A43 est de préférence parallèle au plan moyen formé par la face de fond 12.

Un dispositif d'identification 5, schématisé à la figure 1, permet d'identifier le porteur du plateau. Ce dispositif d'identification 5 est par exemple un lecteur de badge. Selon un mode de réalisation, l'utilisateur est muni d'un badge 6 dans lequel est inclus un identifiant 601 de sorte que le lecteur de badge peut lire et donc acquérir l'identifiant 601 de l'utilisateur lorsque celui-ci se situe devant le poste. A titre d'exemple, le lecteur de badge est un lecteur sans contact. Bien entendu, l'identifiant utilisateur pourrait être obtenu autrement que par lecture d'un badge. A tire d'exemple l'identifiant utilisateur pourrait être une donnée biométrique.

Le poste comprend aussi un dispositif de pilotage 7 configuré pour effectuer différentes opérations. En particulier, le dispositif de pilotage est configuré pour commander le dispositif d'identification 5 de manière à acquérir l'identifiant 601 du porteur du plateau. Le dispositif de pilotage permet aussi de commander les éléments électriques et/ou électroniques du poste, notamment les dispositifs d'acquisition d'images 41, 42, 43, l'écran d'affichage 19, et le système d'éclairage.

Le dispositif de pilotage 7 associe ensuite, dans une base de données locale ou distante, les images acquises avec l'identifiant acquis.

A titre d'exemple, le dispositif de pilotage 7 comprend :
- une unité 70 de traitement et de calcul, telle qu'un ordinateur, une tablette, ou une unité d'un autre type comprenant un processeur,
- un bloc de périphériques internes pour interfacer les périphériques du poste avec l'unité de traitement. Lesdits périphériques peuvent comprendre par exemple les dispositifs d'acquisition d'images, tels que des caméras, des capteurs, le système d'éclairage, des voyants, une imprimante, etc...
- un bloc périphériques externes pour interfacer le poste avec un réseau de communication de données et des périphériques externes, tel qu'un portique d'accès,
- une alimentation électrique.

Le dispositif de pilotage 7 comprend une mémoire dans laquelle est enregistré un identifiant correspondant au poste dont il pilote les différents éléments électriques ou électroniques, tels que les caméras 41, 42, 43, le dispositif d'identification 5, l'écran d'affichage 19 et éventuellement le système d'éclairage 3. Le dispositif de pilotage communique aussi avec la première base de données 700 dont il reçoit les données de compte-utilisateur.

Le dispositif de pilotage peut ainsi comparer l'identifiant de l'utilisateur acquis avec les données de compte utilisateur pour déterminer s'il existe un compte utilisateur enregistré correspondant audit identifiant utilisateur. Dans l'affirmative, le dispositif de pilotage peut comparer l'identifiant du poste qu'il a en mémoire avec l'identifiant de poste associé au compte utilisateur pour déterminer si l'utilisateur a le droit de se servir de ce poste.

Les images 401, 402, 403 de l'ensemble de produits acquises par les caméras 41, 42, 43 sont associées dans la deuxième base de données 800 avec l'identifiant 701 de l'utilisateur, après avoir vérifié que l'identifiant utilisateur 601 acquis correspond bien à l'identifiant utilisateur 701 d'un compte utilisateur prédéfini dans la première base de données 700. Il est fait référence à l'association des images à l'identifiant utilisateur 701, mais bien entendu il pourrait être fait référence à l'identifiant utilisateur 601 qui correspond à l'identifiant utilisateur 701. L'ordre dans lequel les images 401, 402, 403 et l'identifiant 601 sont acquis peut varier suivant les modes de réalisation. Différents modes de réalisation sont présentés ci-après. Les images 401, 402, 403 et l'identifiant 701 font ainsi partie ou constituent un ensemble de données PCM1, encore appelé précommande, qui peut être utilisé pour gérer l'achat dudit ensemble de produits. Une précommande est ainsi mémorisée dans la base de données 800 à chaque passage d'un utilisateur au niveau du poste.

On comprend que les images et identifiant peuvent être mémorisés en étant copiés directement dans la base de données 800 ou à l'aide d'une donnée de renvoi, par exemple un lien d'accès à une image stockée ailleurs que dans la mémoire de la base de données. Selon un aspect particulier, les images peuvent subir des traitements entre leur acquisition et leur mémorisation dans la base de données 800.

Ainsi, la deuxième base de données 800 comprend des ensembles de données qui incluent, pour chaque identifiant utilisateur acquis auquel correspond un identifiant utilisateur d'un compte utilisateur, les images acquises qui sont associées audit identifiant utilisateur. Il est ainsi possible de retrouver par la suite les images acquises à partir de l'identifiant utilisateur.

Avantageusement, le dispositif de pilotage compare le solde avec la valeur de seuil associée au compte et affiche à l'écran une information d'alerte quand le solde est inférieur à ladite valeur de seuil.

On peut prévoir que la valeur du solde soit affichée à l'écran 19 après que le dispositif d'identification 5 a acquis l'identifiant utilisateur et que le dispositif de pilotage a déterminé le compte utilisateur enregistré correspondant.

Selon un mode de réalisation, une fois l'identifiant acquis et le compte utilisateur correspondant identifié, l'écran 19 affiche le solde avant débit. L'affichage de cette information de solde permet de maintenir le regard de l'utilisateur sur l'écran pour suivre les indications affichées à l'écran. Comme expliqué ci-avant ces informations peuvent être par exemple une invitation à reprendre son plateau pour aller manger (cas nominal) ou pour se diriger vers un autre poste (cas particulier).

Le dispositif de pilotage 7 est aussi configuré pour, après que l'identifiant a été associé aux images acquises, commander un dispositif 9 d'autorisation de sortie ou d'indication pour permettre ou indiquer à l'utilisateur de reprendre son plateau (pour aller manger).

Autrement dit, quand l'identification de l'utilisateur est effectuée et que les images sont acquises, le poste émet un signal de validation qui est interprétable par un contrôleur que ce contrôleur soit une personne physique (lorsque le signal de validation est un voyant lumineux - ticket à présenter) ou un système mécanique de contrôle d'accès, tel qu'un portique.

Dans l'exemple illustré aux figures, le dispositif 9 d'autorisation comprend des voyants qui émettent une lumière d'une couleur donnée, par exemple verte, lorsque l'unité 70 de traitement et de calcul commande l'émission par le ou les voyants de ladite lumière de couleur correspondant à une autorisation de sortie ou de validation de passage.

L'utilisation de voyant comme dispositif d'autorisation (ou validation) permet une supervision du processus par un surveillant. On peut aussi prévoir que lesdits voyants permettent d'identifier le statut du poste (service ouvert ou fermé).

La permission de sortie du plateau est validée par le dispositif de pilotage lorsque l'image acquise du plateau et l'identifiant du porteur du plateau ont été associés. Avantageusement et comme expliqué ci-dessus, une condition de validation supplémentaire peut être que l'identifiant corresponde à un utilisateur autorisé à consommer dans le restaurant associé au poste. Une condition de validation supplémentaire peut aussi être que le compte de l'utilisateur correspondant à l'identifiant présente un crédit et/ou autorise un débit suffisant. Ainsi, un seuil prédéterminé de crédit sur le compte ou de débit maximum autorisé peut être introduit comme paramètre de validation.

Selon un mode de réalisation, le dispositif de pilotage 7 est aussi configuré pour, à partir des images acquises associées à l'identifiant de l'utilisateur, identifier au moins une partie du contenu du plateau 2. L'identification d'au moins une partie du contenu du plateau peut être réalisée notamment par reconnaissance de forme. On peut aussi prévoir que l'identification soit réalisée de manière déportée par une personne physique à partir des images acquises et associées à l'identifiant de l'utilisateur.

Avantageusement, une phase dite d'enrôlement est initialement effectuée. La phase d'enrôlement correspond à une phase de mise en oeuvre avant que le poste soit utilisé par un utilisateur muni d'un plateau et selon laquelle les différents produits susceptibles d'être présents sur le plateau, par exemple les différents plats du jour, sont enregistrés dans une base de données en acquérant leur image de préférence avec le poste et en leur associant un identifiant et de préférence un montant numéraire correspondant ou en les associant à des données prédéfinies. L'identification du contenu (comprenant usuellement plusieurs produits) d'un plateau s'effectue alors par la suite en comparant les images acquises du contenu du plateau avec les images de référence des produits préalablement enregistrées lors de ladite phase d'enrôlement.

Avantageusement, la surface de pose 11 du plateau est formée d'une seule pièce et présente, du côté de la face de fond 12, un bord relevé 11B limitant le risque d'infiltration dans le poste. Ledit côté de la face de fond 12 correspond au côté du poste opposé à là où se situe le porteur du plateau lorsqu'il se présente en face du poste.

Le poste 1 comprend une chambre 300 dans laquelle sont logés les dispositifs d'éclairage 31, 32, 33 et les dispositifs d'acquisition d'images 41, 42, 43.

Ladite chambre 300 s'étend au-dessus et à écartement de la surface de pose 11 du plateau. La chambre 300 et la surface de pose définissent entre elles un espace d'insertion du plateau, ouvert latéralement et en face avant, par opposition à la face de fond.

Ladite chambre 300 présente une partie avant de plus grande largeur que celle de la surface de pose. La largeur de ladite chambre 300 correspond à une dimension prise suivant une direction parallèle à l'axe qui relie les faces latérales ouvertes du poste par opposition à la hauteur et à la profondeur dudit poste.

A cet effet, la partie avant de la chambre 300 comprend une paroi de dessus 330 et des parois 320, 340 périphériques, avec en particulier des parties latérales, appelées oreilles 302, 303 permettant de maximiser les différents angles de prise de vue et la surface d'éclairage tout en minimisant le volume nécessaire à l'intégration et l'impact visuel. La face de diffusion 34 forme la face de dessous de ladite chambre 300.

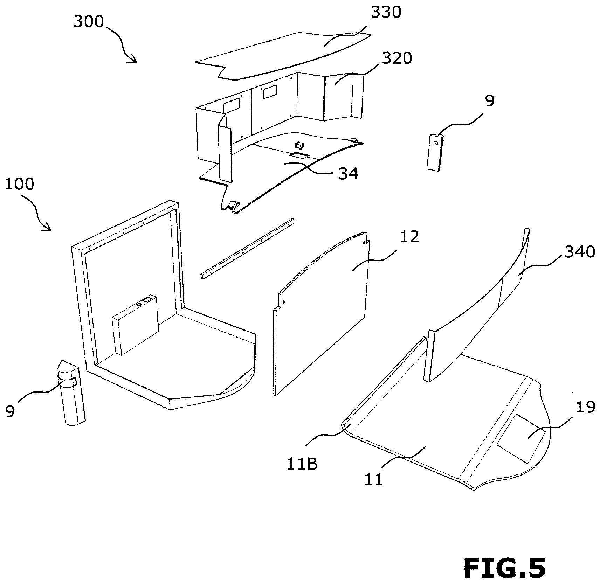

Comme illustré à la figure 5, le poste 1 comprend un châssis 100. Le châssis 100 est en forme d'équerre et de préférence d'un seul tenant pour assurer la rigidité de tous les éléments et permettre tout type d'implémentation : posé sur ou intégré à un meuble, posé sur pied ou mât, ou fixé au mur.

Un espace est délimité entre le châssis 100 et la face de fond 12 et/ou la base 11 pour permettre l'intégration de l'ensemble des éléments techniques au sein des structures pour éviter tous câbles ou connectiques apparents qui pourraient générer des problèmes de sécurité et/ou d'hygiène.

Un bornier 8 sécurisé (pour limiter l'accès intempestif à la connectique) permet de connecter le poste aux périphériques externes et au réseau sans ouverture du poste tout en protégeant l'accès contre des manipulations abusives.

Avantageusement, la face de fond 12 et/ou la surface de pose 11 sont amovibles par rapport au châssis 100. Le fait de prévoir que la base et/ou la face de fond 12 est au moins en partie démontable et donc échangeable permet de faciliter le nettoyage du système. Le fait que la face 12 et/ou la base 11 soit démontable au moins en partie permet aussi de facilement accéder aux composants actifs du poste, ce qui simplifie la maintenance.

Le poste se présente sous la forme d'une structure dont les faces latérales et la face avant sont ouvertes pour pouvoir introduire et retirer le plateau de manière fluide.

Ledit poste 1 comprend un système de communication avec l'utilisateur, de préférence interactif. Comme expliqué ci-dessus, le système de communication comprend l'écran d'affichage 19. Selon un mode de réalisation, le système de communication comprend en outre une interface de communication interactive avec l'utilisateur. L'interface de communication interactive comprend par exemple une couche tactile de l'écran, et/ou un microphone et/ou un haut-parleur.

L'écran 19 permet à l'utilisateur, comme expliqué ci-avant, de visualiser l'état de positionnement de son plateau 2 par rapport à une zone 11A ménagée sur la surface de pose 11 du plateau. Selon un mode de réalisation, l'écran d'affichage 19 affiche l'image du plateau et de son contenu et peut indiquer le positionnement du plateau et de son contenu à atteindre à l'utilisateur, par exemple en affichant un contour à l'intérieur duquel l'image du plateau et de son contenu doit se situer. Selon un aspect particulier, le dispositif de pilotage est configuré pour déterminer si le plateau et son contenu sont bien positionnés à l'intérieur dudit contour et pour afficher des informations d'état de positionnement et/ou des informations de correction de positionnement pour permettre à l'utilisateur de positionner correctement et rapidement son plateau.

On peut prévoir aussi que l'écran forme une interface permettant de valider et/ou de corriger des informations en cas de reconnaissance automatique des produits présents sur le plateau. Une ou plusieurs règles peuvent être prédéfinies dans l'unité de pilotage. A titre d'exemple, le positionnement du plateau ou de son contenu peut être considéré comme incorrect lorsqu'il n'est pas entièrement contenu dans un contour affiché à l'écran et/ou appliqué sur la surface de pose 11.

Le système de communication comprend aussi le dispositif d'identification 5 de l'utilisateur, présenté ci-avant, qui permet de collecter des identifiants issus de badges ou autre support, par exemple de type électronique, tel qu'un smartphone, ou des informations biométriques.

Dans l'exemple illustré aux figures, la partie avant inférieure du poste qui reçoit l'écran d'affichage 19 présente un plan adapté par son inclinaison et ses formes incurvées pour une bonne accessibilité de l'utilisateur. Une telle conception permet d'éviter les reflets, et rend le poste accessible aux personnes handicapées.

Ledit poste comprend un système de refroidissement par convection naturelle qui est agencé pour le refroidissement d'au moins une partie du dispositif de pilotage. Le système de refroidissement par convection naturelle permet d'éviter l'ajout de ventilateur afin de réduire la consommation d'énergie, du bruit et des risques de pannes. Avantageusement, le système de refroidissement est intégré entre le châssis et la face de fond 12, et comprend avantageusement une grille 17 d'accès d'air en bas et en haut.

Différents modes de fonctionnement du poste sont envisageables, dont certains sont présentés ci-dessous.

Selon un premier mode de réalisation, l'étape d'identification de l'utilisateur déclenche l'acquisition d'images. Un tel mode de réalisation permet d'optimiser le temps de passage sur le poste et l'ergonomie du poste. Le nombre d'actions à réaliser par l'utilisateur est réduit et l'utilisateur bénéficie du confort associé au fait de s'identifier après avoir déposé son plateau. En outre, le traitement des données s'effectue de manière fluide puisqu'il n'est pas interrompu. Selon un aspect particulier, les images sont acquises uniquement si l'identifiant utilisateur est reconnu.

On peut prévoir que l'acquisition d'images soit conditionnée au fait que l'identifiant utilisateur corresponde bien à un identifiant d'un compte utilisateur connu et éventuellement au fait qu'une information d'autorisation d'utilisation du système soit associée à cet identifiant utilisateur. On peut prévoir que l'image soit acquise indépendamment du solde et que le solde soit vérifié ensuite, pour, en cas d'insuffisance de solde, indiquer à l'utilisateur de recharger son compte ou d'aller payer à un poste spécifique distinct. Selon un aspect particulier, un tel poste spécifique distinct est configuré pour accéder à la précommande, en particulier aux images acquises associées à l'identifiant utilisateur, de manière à permettre à un opérateur de retrouver à l'aide de l'identifiant de l'utilisateur les images de l'ensemble de produits de l'utilisateur pour déterminer le montant à régler. Selon un aspect particulier et comme expliqué ci-après, ce montant à régler est mémorisé dans un ensemble de données, appelé commande, qui comprend l'identifiant de l'utilisateur correspondant à la précommande.

La troisième base de données 900 comprend des ensembles de données, appelés commandes. Chaque commande comprend l'identifiant de l'utilisateur et une valeur correspondant au prix de vente dudit produit ou ensemble de produit. Ainsi, la commande CM1 illustrée à la figure 1 comprend l'identifiant 701 de l'utilisateur et une valeur 901 correspondant au prix de vente dudit produit ou ensemble de produits. Selon un aspect particulier, la génération d'une commande fait suite à la génération d'une précommande. Selon un mode de réalisation, le produit ou chaque produit dudit ensemble de produits est déterminé à partir des images acquises et le prix associé audit produit ou à chaque produit dudit ensemble de produits, par exemple enregistré dans une base de données, est alors ajouté dans la commande d'une base de données répertoriant les prix du ou des produits. L'identification du ou des produits peut s'effectuer par un logiciel de reconnaissance à partir des images ou à l'aide d'une interface de présentation qui affiche les images d'une précommande et permet à un opérateur de définir le ou les produits qu'il identifie dans les images. A chaque produit est associé un prix.

Le prix total mémorisé dans la commande peut alors être débité du compte utilisateur correspondant.

Un exemple de mise en oeuvre est présenté ci-après. L'utilisateur arrive devant le poste 1 avec son plateau. Il dépose son plateau sur la surface de pose 11 dont l'image filmée par l'un ou plusieurs des dispositifs d'acquisition d'images est affichée à l'écran pour permettre à l'utilisateur de visualiser le positionnement du plateau. Lorsque le plateau est correctement positionné, on peut prévoir que l'écran 19 affiche un message de validation du positionnement.

L'écran d'affichage et/ou un autre équipement du poste invite l'utilisateur à s'identifier. Une fois l'utilisateur identifié, le dispositif de pilotage déclenche l'acquisition de l'image du plateau et associe l'image à l'identifiant dans une base de données. Un signal d'autorisation de sortie ou de validation du passage est alors émis par le poste. Ce signal peut être par exemple un signal visuel, l'émission d'un ticket et/ou l'envoi d'une commande d'ouverture d'un portique.

Selon un autre mode de réalisation, l'acquisition de l'image du plateau est déclenchée préalablement à l'identification de l'utilisateur, soit par l'utilisateur qui y a été invité par l'affichage sur écran, soit par le système qui auto-déclenche l'acquisition. L'écran d'affichage invite ensuite l'utilisateur à s'identifier.

Selon une autre variante de réalisation, l'identification est réalisée indépendamment de l'état de positionnement du plateau. Ainsi, l'utilisateur s'identifie après avoir déposé le plateau sur la surface de pose ou avec le plateau dans les mains. L'identification de l'utilisateur déclenche la surveillance de l'état de positionnement du plateau. Une fois validé le bon positionnement du plateau sur la surface de pose, l'acquisition de chaque image du plateau est déclenchée soit par une action de l'utilisateur qui y a été invité par l'affichage sur l'écran, soit par le système qui auto-déclenche l'acquisition.

Les fonctions et étapes décrites ci-dessus peuvent être mise en oeuvre sous forme de programme informatique ou via des composants matériels (p. ex. des réseaux de portes programmables). En particulier, les fonctions et étapes opérées par le poste 1, et en particulier par l'unité de pilotage, peuvent être réalisées par des jeux d'instructions informatiques implémentées dans un (micro)processeur ou contrôleur ou être réalisées par des composants électroniques dédiés ou des composants de type FPGA ou ASIC. Il est aussi possible de combiner des parties informatiques et des parties électroniques.

Les programmes d'ordinateur, ou instructions informatiques, peuvent être contenus dans des dispositifs de stockage de programme, par exemple des supports de stockage non transitoires de données numériques lisibles par ordinateur, par exemple une mémoire non volatile. Les programmes ou instructions peuvent aussi être exécutés à partir de périphériques de stockage de programme.

## Revendications

1. Système d'identification ou d'aide à l'identification d'un produit ou ensemble de produits, tel que des produits correspondant au contenu d'un plateau (2) repas, d'un utilisateur,
ledit système d'identification ou d'aide à l'identification comprenant :
- une surface de pose (11) dudit produit ou ensemble de produits ;
- un système d'éclairage (3) permettant d'éclairer la surface de pose (11) ;
- plusieurs dispositifs (41, 42, 43) d'acquisition d'images orientés vers la surface de pose (11) de manière à acquérir des images dudit produit ou ensemble de produits selon différents angles de vue ;
- un écran d'affichage (19) ;
**caractérisé en ce que** le système d'identification ou d'aide à l'identification comprend aussi:
- une première base de données (700) dans laquelle sont enregistrées des données de comptes utilisateurs, chaque compte utilisateur (CU1) comprenant :
∘ un identifiant d'un utilisateur (701) ;
∘ une valeur de solde (702), créditeur ou débiteur ;
- un dispositif d'identification (5) permettant d'identifier l'utilisateur ;
- un dispositif de pilotage (7) configuré pour :
- acquérir un identifiant (601) de l'utilisateur ;
- déterminer si l'identifiant (601) de l'utilisateur acquis correspond à l'identifiant de l'utilisateur (701) d'un compte utilisateur enregistré ;
- acquérir des images (401, 402, 403) dudit produit ou ensemble de produits à l'aide desdits dispositifs (41, 42, 43) d'acquisition d'images ;
associer les images (401, 402, 403) acquises et l'identifiant (701) de l'utilisateur dans une deuxième base de données (800),
et **en ce que** le système comprenant une face de fond (12) qui s'étend sensiblement orthogonalement à la surface de pose (11), la face de fond (12) absorbe moins la lumière du jour que la surface de pose (11),
et **en ce que** lesdits dispositifs (41, 42, 43) d'acquisition d'images comprennent un premier dispositif (41) d'acquisition d'images dont l'axe optique est orienté perpendiculairement à la surface de pose (11), ainsi qu'un deuxième et un troisième dispositifs (42, 43) d'acquisition d'images disposés de part et d'autre d'un plan passant par l'axe optique du premier dispositif (41) d'acquisition d'images et perpendiculaire à la face de fond (12), les axes optiques étant orientés vers la surface de pose (11) et inclinés en sens opposé l'un de l'autre par rapport à l'axe optique du premier dispositif (41) d'acquisition d'images.

2. Système d'identification ou d'aide à l'identification selon la revendication 1, **caractérisé en ce que** le système comprend une troisième base de données (900) qui comprend des ensembles de données, appelés commandes (CM1), chaque ensemble comprenant l'identifiant (701) de l'utilisateur et une valeur (901) correspondant au prix de vente dudit produit ou ensemble de produits.

3. Système d'identification ou d'aide à l'identification selon la revendication 1 ou 2, **caractérisé en ce que**, chaque compte utilisateur (CU1) comprenant une information de droit d'utilisation (703) pour indiquer si l'utilisateur associé au compte utilisateur (CU1) est autorisé ou non à utiliser ledit système d'identification ou d'aide à l'identification,
le dispositif de pilotage (7) est configuré pour, après avoir déterminé le compte utilisateur (CU1) correspondant à l'identifiant de l'utilisateur (601) acquis, autoriser ou non l'utilisation du système en fonction de l'information de droit d'utilisation (703) associée audit compte utilisateur (CU1).

4. Système d'identification ou d'aide à l'identification selon l'une des revendications précédentes, **caractérisé en ce que**, au moins l'un des dispositifs (41, 42, 43) d'acquisition d'images permettant de fournir un flux vidéo, le dispositif de pilotage (7) est configuré pour :
- détecter l'introduction dudit produit ou ensemble de produits au niveau de la surface de pose (11) ;
- afficher à l'écran (19), la vidéo du produit ou de l'ensemble de produits présent au niveau de la surface de pose (11), ainsi que des informations définies en fonction de la position du produit ou de l'ensemble de produits par rapport à la surface de pose (11) pour indiquer si le produit ou l'ensemble de produits est correctement positionné.

5. Système d'identification ou d'aide à l'identification selon la revendication 4, **caractérisé en ce que** le dispositif de pilotage (7) est configuré pour, à partir des images du flux vidéo et en fonction d'au moins une règle prédéfinie, déterminer si le produit ou l'ensemble de produits est ou non correctement positionné relativement à la surface de pose (11).

6. Système d'identification ou d'aide à l'identification selon la revendication 5, **caractérisé en ce que** le dispositif de pilotage (7) est configuré pour autoriser ou non l'acquisition de l'identifiant utilisateur (601) à l'aide du dispositif d'identification (5), en fonction de l'état de positionnement dudit produit ou ensemble de produits par rapport à la surface de pose (11).

7. Système d'identification ou d'aide à l'identification selon la revendication 6, **caractérisé en ce que** le dispositif de pilotage (7) est configuré pour déclencher l'acquisition des images (401, 402, 403) dudit produit ou ensemble de produits en fonction de caractéristiques de l'identifiant utilisateur (601) acquis.

8. Système d'identification ou d'aide à l'identification selon l'une des revendications 5 à 7,
**caractérisé en ce que**, pour réaliser l'étape d'acquisition d'images (401, 402, 403), le dispositif de pilotage (7) est configuré pour extraire une image (401, 402, 403) dudit flux vidéo acquis par l'un des dispositifs (41, 42, 43) d'acquisition d'images.

9. Système d'identification ou d'aide à l'identification selon l'une des revendications précédentes, **caractérisé en ce que**, chaque dispositif d'acquisition d'images (41, 42, 43) comprenant un capteur CCD,
le dispositif de pilotage (7) est configuré pour détecter la luminosité ambiante, et régler la sensibilité des capteurs CCD en fonction de la luminosité ambiante mesurée.

10. Système d'identification ou d'aide à l'identification selon l'une des revendications précédentes, **caractérisé en ce que** le système d'éclairage (3) comprend des dispositifs d'éclairage (31, 32, 33) et un dispositif de diffusion (34) de la lumière, tel qu'une plaque translucide, par exemple en plexiglass.

11. Système d'identification ou d'aide à l'identification selon la revendication 10, **caractérisé en ce que** le dispositif de diffusion (34) de la lumière présente une face, orientée vers la surface de pose (11), qui est courbe.

12. Système d'identification ou d'aide à l'identification selon l'une des revendications précédentes, **caractérisé en ce que** les dispositifs d'acquisition d'images, le système d'éclairage, et la surface de pose faisant partie d'une même structure se présentant sous la forme d'un poste (1) devant lequel l'utilisateur se positionne pour poser ledit produit ou ensemble de produits, la surface de pose (11) est formée d'une seule pièce et présente, du côté de la face de fond (12), un bord relevé (11B) limitant le risque d'infiltration dans le poste.

13. Système d'identification ou d'aide à l'identification selon l'une des revendications précédentes, **caractérisé en ce que**, les dispositifs d'acquisition d'images, le système d'éclairage, et la surface de pose faisant partie d'une même structure se présentant sous la forme d'un poste (1) devant lequel l'utilisateur se positionne pour poser ledit produit ou ensemble de produits, le poste (1) comprenant une chambre (300) dans laquelle est logé le système d'éclairage (3),
ladite chambre (300) s'étend au-dessus et à écartement de la surface de pose (11), ladite chambre présentant une partie avant de plus grande largeur que celle de la surface de pose (11).

14. Système d'identification ou d'aide à l'identification selon l'une des revendications précédentes, **caractérisé en ce que** le dispositif de pilotage (7) est aussi configuré pour, après que l'identifiant a été associé aux images acquises, commander un dispositif (9) d'autorisation de sortie ou d'indication pour permettre ou indiquer à l'utilisateur de reprendre le produit ou l'ensemble de produits.

## Patentansprüche

1. System zur Identifizierung oder Identifizierungsunterstützung eines Produkts oder einer Gruppe von Produkten, wie beispielsweise Produkte, die dem Inhalt eines Tabletts (2) einer Mahlzeit entsprechen, eines Benutzers,
das Identifizierungs- oder Identifizierungsunterstützungssystem umfassend:
- eine Auflagefläche (11) des Produkts oder der Produktgruppe;
- ein Beleuchtungssystem (3), das es ermöglicht, die Auflagefläche (11) zu beleuchten;
- mehrere Bilderfassungsvorrichtungen (41, 42, 43), die auf die Auflagefläche (11) ausgerichtet sind, um Bilder des Produkts oder der Produktgruppe aus verschiedenen Blickwinkeln zu erfassen;
- einen Anzeigebildschirm (19);
**dadurch gekennzeichnet, dass** das Identifizierungs- oder Identifizierungsunterstützungssystem auch Folgendes umfasst:
- eine erste Datenbank (700), in der Daten von Benutzerkonten gespeichert sind, jedes Benutzerkonto (CU1) umfassend:
∘ eine Kennung eines Benutzers (701);
∘ einen Wert für den Saldo (702), Gutschrift oder Belastung;
- eine Identifizierungsvorrichtung (5), die es ermöglicht, den Benutzer zu identifizieren;
- eine Steuervorrichtung (7), die zu Folgendem konfiguriert ist:
- Erfassen einer Kennung (601) des Benutzers;
- Bestimmen, ob die erfasste Kennung (601) des Benutzers mit der Kennung des Benutzers (701) eines registrierten Benutzerkontos übereinstimmt;
- Erfassen von Bildern (401, 402, 403) des Produkts oder der Produktgruppe mithilfe der Bilderfassungsvorrichtung (41, 42, 43);
Assoziieren der erfassten Bilder (401, 402, 403) und der Kennung (701) des Benutzers in einer zweiten Datenbank (800),
und dass das System eine Bodenfläche (12) umfasst, die sich im Wesentlichen orthogonal zu der Auflagefläche (11) erstreckt, wobei die Bodenfläche (12) weniger Tageslicht absorbiert als die Auflagefläche (11),
und dass die Bilderfassungsvorrichtungen (41, 42, 43) eine erste Bilderfassungsvorrichtung (41) umfassen, deren optische Achse senkrecht zu der Auflagefläche (11) ausgerichtet ist, sowie eine zweite und eine dritte Bilderfassungsvorrichtung (42, 43), die auf beiden Seiten einer Ebene angeordnet sind, die durch die optische Achse der ersten Bilderfassungsvorrichtung (41) und senkrecht zu der Bodenfläche (12) verläuft, wobei die optischen Achsen auf die Auflagefläche (11) gerichtet und in Bezug auf die optische Achse der ersten Bilderfassungsvorrichtung (41) in entgegengesetzter Richtung zueinander geneigt sind.

2. Identifizierungs- oder Identifizierungsunterstützungssystem nach Anspruch 1, **dadurch gekennzeichnet, dass** das System eine dritte Datenbank (900) umfasst, die Datensätze umfasst, die als Bestellungen (CM1) bezeichnet werden, jeder Satz umfassend die Kennung (701) des Benutzers und einen Wert (901), der dem Verkaufspreis des Produkts oder der Produktgruppe entspricht.

3. Identifizierungs- oder Identifizierungsunterstützungssystem nach Anspruch 1 oder 2, **dadurch gekennzeichnet, dass** jedes Benutzerkonto (CU1) Benutzungsrechtinformationen (703) umfasst, um anzugeben, ob der mit dem Benutzerkonto (CU1) assoziiert Benutzer berechtigt ist, das Identifizierungs- oder Identifizierungsunterstützungssystem zu nutzen,
die Steuervorrichtung (7) konfiguriert ist, um nach Bestimmen, des Benutzerkontos (CU1), das der erfassten Benutzerkennung (601) entspricht, die Nutzung des Systems abhängig von den Nutzungsrechtinformationen (703), die mit dem Benutzerkonto (CU1) assoziiert sind, zu erlauben oder nicht zu erlauben.

4. Identifizierungs- oder Identifizierungsunterstützungssystem nach einem der vorherigen Ansprüche, **dadurch gekennzeichnet, dass** mindestens eine der Bilderfassungsvorrichtungen (41, 42, 43) ein Bereitstellen eines Videostreams ermöglicht, wobei die Steuervorrichtung (7) zu Folgendem konfiguriert ist:
- Erkennen der Einführung des Produkts oder der Produktgruppe auf Ebene der Ablagefläche (11);
- Anzeigen, auf dem Bildschirm (19), des Videos des Produkts oder der Produktgruppe, das bzw. die an der Auflagefläche (11) vorhanden ist, sowie Informationen, die abhängig von der Position des Produkts oder der Produktgruppe in Bezug auf die Auflagefläche (11) definiert sind, um anzugeben, ob das Produkt oder die Produktgruppe korrekt positioniert ist.

5. Identifizierungs- oder Identifizierungsunterstützungssystem nach Anspruch 4, **dadurch gekennzeichnet, dass** die Steuervorrichtung (7) konfiguriert ist, um anhand der Bilder des Videostreams und abhängig von mindestens einer vordefinierten Regel zu bestimmen, ob das Produkt oder die Produktgruppe in Bezug auf die Auflagefläche (11) korrekt positioniert ist.

6. Identifizierungs- oder Identifizierungsunterstützungssystem nach Anspruch 5, **dadurch gekennzeichnet, dass** die Steuervorrichtung (7) konfiguriert ist, um die Erfassung der Benutzerkennung (601) mittels der Identifizierungsvorrichtung (5) abhängig von dem Positionierungszustand des Produkts oder der Produktgruppe in Bezug auf die Auflagefläche (11) zuzulassen oder nicht zuzulassen.

7. Identifizierungs- oder Identifizierungsunterstützungssystem nach Anspruch 6, **dadurch gekennzeichnet, dass** die Steuervorrichtung (7) konfiguriert ist, um die Erfassung der Bilder (401, 402, 403) des Produkts oder der Produktgruppe abhängig von Merkmalen der erfassten Benutzerkennung (601) auszulösen.

8. Identifizierungs- oder Identifizierungsunterstützungssystem nach einem der Ansprüche 5 bis 7,
**dadurch gekennzeichnet, dass** zum Durchführen des Schritts der Bilderfassung (401, 402, 403) die Steuervorrichtung (7) konfiguriert ist, um ein Bild (401, 402, 403) aus dem Videostream zu extrahieren, der von einer der Bilderfassungsvorrichtungen (41, 42, 43) erfasst wird.

9. Identifizierungs- oder Identifizierungsunterstützungssystem nach einem der vorherigen Ansprüche, **dadurch gekennzeichnet, dass** jede Bilderfassungsvorrichtung (41, 42, 43) einen CCD-Sensor umfasst,
wobei die Steuervorrichtung (7) konfiguriert ist, um die Umgebungshelligkeit zu erkennen und die Empfindlichkeit der CCD-Sensoren abhängig von der gemessenen Umgebungshelligkeit einzustellen.

10. Identifizierungs- oder Identifizierungsunterstützungssystem nach einem der vorherigen Ansprüche, **dadurch gekennzeichnet, dass** das Beleuchtungssystem (3) Beleuchtungsvorrichtungen (31, 32, 33) und eine Streuvorrichtung (34) des Lichts, wie beispielsweise eine lichtdurchlässige Platte, beispielsweise aus Plexiglas, umfasst.

11. Identifizierungs- oder Identifizierungsunterstützungssystem nach Anspruch 10, **dadurch gekennzeichnet, dass** die Streuvorrichtung (34) des Lichts eine Seite aufweist, die der Auflagefläche (11) zugewandt ist und die gekrümmt ist.

12. Identifizierungs- oder Identifizierungsunterstützungssystem nach einem der vorherigen Ansprüche, **dadurch gekennzeichnet, dass** die Bilderfassungsvorrichtungen, das Beleuchtungssystem und die Auflagefläche Teil ein und derselben Struktur sind, die sich in Form einer Station (1) darstellt, vor der sich der Benutzer positioniert, um das Produkt oder die Produktgruppe aufzulegen, wobei die Auflagefläche (11) aus einem einzigen Stück geformt ist und auf der Seite der Bodenfläche (12) einen erhöhten Rand (11B) aufweist, der das Risiko eines Eindringens in die Station begrenzt.

13. Identifizierungs- oder Identifizierungsunterstützungssystem nach einem der vorherigen Ansprüche, **dadurch gekennzeichnet, dass** die Bilderfassungsvorrichtungen, das Beleuchtungssystem und die Auflagefläche Teil einer gleichen Struktur sind, die sich in Form einer Station (1) darstellt, vor der sich der Benutzer positioniert, um das Produkt oder die Produktgruppe aufzulegen, die Station (1) umfassend eine Kammer (300), in der das Beleuchtungssystem (3) untergebracht ist,
wobei sich die Kammer (300) über und im Abstand von der Setzfläche (11) erstreckt, wobei die Kammer einen vorderen Abschnitt mit einer größeren Breite als die Auflagefläche (11) aufweist.

14. Identifizierungs- oder Identifizierungsunterstützungssystem nach einem der vorherigen Ansprüche, **dadurch gekennzeichnet, dass** die Steuervorrichtung (7) auch konfiguriert ist, um, nach Assoziieren der Kennung mit den erfassten Bildern, eine Freigabe- oder Anzeigevorrichtung (9), um dem Benutzer die Wiederaufnahme des Produkts oder der Produktgruppe zu ermöglichen oder anzugeben, zu steuern

## Claims

1. A system for identifying or assisting in identifying a product or a set of products of a user, such as products corresponding to the contents of a meal tray (2),
said system for identification or assistance in identification comprising:
- a counter (11) for receiving said product or set of products;
- a lighting system (3) for lighting the counter (11);
- a plurality of image acquisition devices (41, 42, 43) pointing toward the counter (11) so as to acquire images of said product or set of products at different viewing angles;
- a display screen (19);
**characterized in that** the system for identification or assistance in identification also comprises:
- a first database (700) storing user account data, each user account (CU1) comprising:
∘ an identifier of a user (701);
∘ a credit or debit balance value (702);
- an identifier device (5) enabling the user to be identified;
- a control device (7) configured to:
- acquire an identifier (601) of the user;
- determine whether the acquired identifier (601) of the user corresponds to the identifier of the user (701) of a stored user account;
- acquire images (401, 402, 403) of said product or set of products by using said image acquisition devices (41, 42, 43);
associate the acquired images (401, 402, 403) with the identifier (701) of the user in a second database (800),
and **in that** the system for identification or assistance in identification comprises a back face (12) that extends substantially orthogonally to the counter (11), the back face (12) absorbing daylight less than the counter (11);
and **in that** said image acquisition devices (41, 42, 43) comprise a first image acquisition device (41) whose optical axis is oriented perpendicularly to the counter (11), and second and third image acquisition devices (42, 43) arranged on either side of a plane passing through the optical axis of the first image acquisition device (41) and perpendicular to the back face (12), the optical axes pointing toward the counter (11) and sloping in mutually opposite directions relative to the optical axis of the first image acquisition device (41).

2. The system for identification or assistance in identification according to claim 1, **characterized in that** the system comprises a third database (900) containing datasets, referred to as commands (CM1), each dataset comprising the identifier (701) of the user and a value (901) corresponding to the sale price of said product or set of products.

3. The system for identification or assistance in identification according to claim 1 or 2, **characterized in that**, each user account (CU1) comprising user rights information (703) for indicating whether or not the user associated with the user account (CU1) is authorized to use said system for identification or assistance in identification,
the control device (7) is configured, after determining the user account (CU1) that corresponds to the acquired user identifier (601), to authorize or to refuse the use of the system as a function of the user rights information (703) associated with said user account (CU1).

4. The system for identification or assistance in identification according to one of the preceding claims, **characterized in that**, at least one of the image acquisition devices (41, 42, 43) serving to provide a video stream, and the control device (7) is configured to:
- detect the placement of said product or set of products on the counter (11);
- display, on the screen (19), the video of the product or the set of products present on the counter (11), as well as information defined as a function of the position of the product or the set of products relative to the counter (11) to indicate whether the product or the set of products is positioned correctly.

5. The system for identification or assistance in identification according to claim 4, **characterized in that** the control device (7) is configured, on the basis of the images of the video stream and as a function of at least one predefined rule, to determine whether the product or the set of products is or is not correctly positioned relative to the counter (11).

6. The system for identification or assistance in identification according to claim 5, **characterized in that** the control device (7) is configured to authorize or to refuse the acquisition of the user identifier (601) by means of the identification device (5), as a function of the positioning state of said product or set of products relative to the counter (11).

7. The system for identification or assistance in identification according to claim 6, **characterized in that** the control device (7) is configured to trigger the acquisition of images (401, 402, 403) of said product or set of products as a function of characteristics of the acquired user identifier (601).

8. The system for identification or assistance in identification according to one of claims 5 to 7,
**characterized in that**, in order to perform the step of acquiring images (401, 402, 403), the control device (7) is configured to extract an image (401, 402, 403) from said video stream acquired by one of the image acquisition devices (41, 42, 43).

9. The system for identification or assistance in identification according to one of the preceding claims, **characterized in that**, each image acquisition device (41, 42, 43) comprising a CCD sensor,
the control device (7) is configured to detect ambient brightness and to adjust the sensitivity of the CCD sensors as a function of the measured ambient brightness.

10. The system for identification or assistance in identification according to one of the preceding claims, **characterized in that** the lighting system (3) comprises lighting devices (31, 32, 33) and a light diffusion device (34), such as a translucent plate, for example made from plexiglass.

11. The system for identification or assistance in identification according to claim 10, **characterized in that** the light diffusion device (34) presents a face facing toward the counter (11), which face is curved.

12. The system for identification or assistance in identification according to one of the preceding claims, **characterized in that** the image acquisition devices, the lighting system and the counter are part of the same structure assuming the form of a station (1) before which the user positions himself to place said product or set of products, the counter (11) is made as a single piece and presents, beside the back face (12), a raised edge (11B) limiting any risk of infiltration into the station.

13. The system for identification or assistance in identification according to one of the preceding claims, **characterized in that** the image acquisition devices, the lighting system and the counter are part of the same structure assuming the form of a station (1) before which the user positions himself to place said product or set of products, the station (1) comprising a chamber (300) housing the lighting system (3),
said chamber (300) extends above and apart from the counter (11), said chamber presenting a front portion of width that is greater than the width of the counter (11).

14. The system for identification or assistance in identification according to one of the preceding claims, **characterized in that** the control device (7) is also configured, after the identifier has been associated with the acquired images, to control a device (9) for authorizing exit or for issuing an indication so as to allow or invite the user to take away the product or the set of products.
